# EUROPÄISCHE PATENTSCHRIFT

(11) **EP 3 014 196 B1**
(45) Veröffentlichungstag und Bekanntmachung des Hinweises auf die Patenterteilung: **12.09.2018**
(21) Anmeldenummer: 14789773.0
(22) Anmeldetag: 23.06.2014
(51) Int. Cl.: F24F 5/00, F24F 13/02, F24D 3/18, F24D 19/10, F24S 10/00

(54) **BAUELEMENTE UND BAUWERKSTEILE SOWIE VERFAHREN FÜR EINE ENERGIEEFFIZIENTE TRANSFORMATION VON ERNEUERBAREN ENERGIEN IN GEBÄUDEN**
COMPONENTS, CONSTRUCTION PARTS AND METHOD FOR AN ENERGY-EFFICIENT TRANSFORMATION OF RENEWABLE ENERGY IN BUILDINGS
ÉLÉMENTS STRUCTURAUX ET ASSEMBLAGE AINSI QUE PROCÉDÉ DE TRANSFORMATION D'ÉNERGIES RENOUVELABLES AVEC UN RENDEMENT ÉNERGÉTIQUE ÉLEVÉ DANS DES BÂTIMENTS

(30) Priorität: 24.06.2013 DE 102013010488
(43) Veröffentlichungstag der Anmeldung: 04.05.2016
(73) Patentinhaber: Butic, Marijan, 80636 München (DE)
(72) Erfinder: Butic, Marijan, 80636 München (DE)
(86) Internationale Anmeldenummer: PCT/DE2014/000315
(87) Internationale Veröffentlichungsnummer: WO 2014/206389

(56) Entgegenhaltungen:
- EP-A1- 0 656 450
- EP-A2- 0 840 074
- WO-A2-2011/018088
- AT-A1- 506 610
- DE-A1- 2 739 522
- DE-A1- 2 907 042
- DE-A1- 3 018 046
- DE-B4-102004 023 268
- FR-A1- 2 955 379
- US-A- 4 216 762

## Beschreibung

Die Erfindung betrifft ein Bauwerksteil in Fachwerkbauweise sowie ein Gebäude, insbesondere ein Niedrigenergiehaus sowie ein bioenergetisches Gebäude und ein Verfahren zum Betreiben eines solchen Bauwerksteils bzw. Gebäudes. Schon seit geraumer Zeit werden große Anstrengungen unternommen, um energietechnische Anforderungsniveaus bei Gebäuden zu verbessern.

Derzeit erfolgt das Heizen mit fossilen Brennstoffen hauptsächlich durch Verbrennung von Öl oder Gas. Die beim chemischen Prozess der Verbrennung entstehenden giftigen Substanzen: Schwefeldioxid, Stickoxide und andere Schadstoffe belasten die Umwelt sehr. Darüber hinaus gefährden sie unsere Gesundheit.

Jede Verbrennung, auch die von Gas und Biomasse, verursacht Kohlendioxyd, welches zum Treibhauseffekt beiträgt und für die drohenden Klimaveränderungen verantwortlich ist. So emittiert beispielsweise eine durchschnittliche Ölheizung eines Einfamilienhauses ca. 6 t Kohlendioxid pro Jahr, eine Gasheizung ca. 4 t. Dieser Hausbrand ist für bis zu 40% des weltweit von Kohlendioxid verursachten Treibhauseffekts ursächlich. Deswegen wird versucht, mit neuen Gebäuderichtlinien einen Primärenergieverbrauch zu begrenzen. (Karl Ochsner, Wärmepumpen in der Heizungstechnik, C. F. Müller Verlag - Heidelberg; S.2)

Zusätzlich zu der Begrenzung des Energieverbrauchs in Gebäuden wird versucht ein möglichst natürliches und gesundes Lebensumfeld für die Bewohner bzw. die Benutzer der Gebäude zu erreichen. Dazu ist es notwendig, das Raumklima steuern zu können. Unter Raumklima wird Temperatur (Luft, Wände), Feuchte, Luftgeschwindigkeit und andere physikalische Luft- und Energiezustände verstanden. Unter Raumluftqualität verstehen wir eine Beimengung, Zusammensetzung, Verunreinigung von unterschiedlichen Substanzen, d.h. auch einen Inhalt an so genannten Schadstoffanteilen in der Luft.

Eine kontrollierte Wohnraumbelüftung ist aus oben genannten Gründen besonders wünschenswert. Dadurch können Folgen wie: gesundheitsschädliche Schimmelpilzbildung, starke Vermehrung von Mikroben, Viren und Insekten die zu Allergien führen können - sowie Kopfschmerzen durch zu hohe Kohlendioxid-Konzentration und Sauerstoffmangel vermieden werden und darüber hinaus eine zu hohe relative Luftfeuchtigkeit mit Feuchtebildung an bauphysikalisch exponierten Bauteilen eingeschränkt werden.

Eine Lösung zu oben genannten Problemen schlägt beispielsweise die gattungsbildende Druckschrift DE 10 2004 023 268 B4 vor. Darin wird ein bioenergetisches Haus oder Gebäude offenbart, welches mittels eines modularen Bausystems auf einfache Art und Weise herstellbar ist. In Abhängigkeit von "in situ" vorliegenden klimatischen Bedingungen und von vor Ort üblichen Baumaterialien kann mittels weniger Grundelemente ein statisch tragfähiges Gebäude erstellt werden, das innerhalb seiner Bauteile Kanäle zum Belüften bzw. Energietransport aufweist. Dadurch kann eine natürliche Klimatisierung innerhalb des Gebäudes gewährleistet werden. Des Weiteren kann die Wand als Energiespeicher dienen, um entnommene oder zugeführte Energie zu einer Optimierung des Energiebedarfs des Gebäudes nutzen zu können. Allerdings erfolgt der Energietransport, beispielsweise der von Sonnenenergie die auf einer äußeren Wandoberfläche aufgenommen wird, über Wärmeleitung durch die Wand hindurch zu einer Oberfläche der Wand, die innerhalb des Gebäudes an den Wohnraum grenzt. Eine solche Wärmeleitung ist über den Tag hinweg größeren Schwankungen ausgesetzt und weist darüber hinaus auch hohe Latenzzeiten auf, die eine kontrollierte Wärme- bzw.

Energieübertragung in innere Räumlichkeiten des Gebäudes - bzw. aus dem Gebäude nach draußen - nur sehr schwierig steuern bzw. beeinflussen lässt.

Demnach besteht nach wie vor ein Bedürfnis, die Effektivität und Effizienz der Klimatisierung von Gebäudeinnenräumen zu verbessern bzw. bereits vorhandene Techniken weiterzubilden, wie sie beispielsweise in der Druckschrift DE 10 2004 023 268 B4 offenbart sind.

Aus der Druckschrift FR 2955379 A1 ist eine Solaranlage mit einem Sonnenkollektor bekannt, der in einem Mauerwerk integriert ist und dessen Leitungen den Transport eines Arbeitsfluids (z.B. Wasser) über einen Antrieb in weitere Bauwerksteile ermöglicht. Dies kann entweder direkt von einem Absorber des Sonnenkollektors zu einem Wärmestrahler) erfolgen, oder zu weiter abgelegenen Bauwerkteilen eines damit ausgerüsteten Gebäudes. Darüber hinaus kann dem Sonnenkollektor über eine dazu geschaltete Kraftwärmemaschine Energie zugeführt oder entnommen werden.

Eine weitere Nutzung von Fassadenelementen zur Verwendung mit einer Kraftwärmemaschine ist aus der Druckschrift DE 2907042 A1 bekannt. Dabei werden mittels eines Mediums durchströmte Absorber und Strahler derart in eine Außenwandkonstruktion eingebaut, insbesondere im Bereich von Fenstern mit großen Wärmeverlusten, dass die durch eine außenwandströmende Wärme durch den Absorber aufgefangen und mittels einer Wärmepumpe entgegen den natürlichen Wärmestrom - durch die Außenwand - dem Strahler zugeführt. Dabei wird eine Heizrippe als Strahler auf der einen und eine Kühlrippe als Absorber auf der anderen Seite der dortigen Umgebung aufgenommen und auf der anderen Seite an die dortige Umgebung abgegeben werden. Werden die gegenüberliegenden Rippen an eine Wärmepumpe angeschlossen, so wird mit deren Kühlkreislauf die Kühlrippen und deren Außenwand unmittelbar gegenüberliegend angeordnet. Mittels einer solchen Fensterrahmen-/Fassadenkonstruktion kann gleichzeitig auf der einen Seite Wärme von der
Heizkreislauf die gegenüberliegende Heizrippe gegebenenfalls mit geschlossenem Flächenabsorber bzw. Flächenstrahler versorgt.

Eine weitere Druckschrift AT 506610 A1 offenbart ein Bewehrungsgitter, das in einem Baukörper integriert ist, dessen Streben des Bewährungsgitters zumindest teilweise als Wärmetauscherrohre ausgebildet sind. Die Wärmetauscherrohre sind an eine Wärmepumpe, eine Kühlanlage, eine Heizungsanlage oder dgl. angeschlossen.

Ähnlich zur Lehre der vorherstehend erwähnten Druckschrift AT 506610 A1 offenbart die Druckschrift WO 2011/018088 auch Wandelemente die in ihrem inneren mit Rohren zur Durchleitung eines Fluids zum Kühlen und Heizen der Wandelemente ausgestattet sind. Darüber hinaus sind im Inneren des Wandelementes Luftkanäle vorgesehen, die es ermöglichen zusätzlich zu den Wandelementen auch die durch die Luftkanäle durchströmende Luft zu kühlen oder zu heizen. Die Rohre können an eine Wärmepumpe angeschlossen werden.

Aus der Offenlegungsschrift DE 27 39 522 A1 ist ein Fassadenelement für eine Gebäude-Vorhangwand bekannt, bestehend aus einem feuerbeständigen und wärmedämmenden Brüstungspanel und einem innenseitig angeordneten, an einer ein Wärmetransportmedium führende Leitung angeschlossenen Wärmetauscher, der mit einem weiteren, auf der Außenseite des Brüstungspanels angeordneten Wärmetauscher in einem geschlossenen Wärmetauschsystem verbunden ist, wobei ein Wärmetauscher Wärme aufnimmt und der andere Wärmetauscher Wärme abgibt. Die unteren Enden beider Wärmetauscher sind durch eine interne Verbindungsleitung, in die eine Expansionsdrossel eingebaut ist, miteinander verbunden und die oberen Enden beider Wärmetauscher sind mittels Leitungen mit einem dazwischengeschalteten Kompressor miteinander verbunden. Dadurch ist eine Möglichkeit vorgesehen, das Wärmetauschsystem vom Heizkreislauf auf einen Kühlkreislauf und umgekehrt umzustellen.

Ein weiteres Temperatur-Regelsystem für einen von Wänden umschlossenen Raum ist in der DE 30 18 046 A1 offenbart, das ein Wärmepumpensystem einsetzt, welches die Vorteile der Schaffung einer verhältnismäßig großen Wärmemenge mit geringem primären Energieverbrauch verbindet, bei dem durch eine Kühlanlage mit einem Kühlabschnitt und einem Heizabschnitt, durch eine Einlassleitung, die Luft von außerhalb des Raumes in das Rauminnere hinter den einen der Abschnitte der Kühlanlage führt und durch eine Auslassleitung, die Luft aus dem Rauminneren nach außen hinter den anderen der Abschnitte der Kühlanlage führt. Die Einlass- und Auslassleitungen haben jeweils ein Einlass- und ein Auslassende, und es sind an dem Einlassende der Einlass- und/oder der Auslassleitung Mittel vorgesehen, die Luft in Wärmeaustauschbeziehung mit der Wand bringen, bevor die Luft in die Leitung eintritt. Auf diese Weise wird Wärme von einer unvermeidlichen Wärmeableitung durch die Wand zurückgewonnen, indem die Wand selbst als passiver Wärmeaustauscher zwischen Frischluft und Abluft ausgenutzt wird.

Die Druckschrift EP 0 656 450 A1 offenbart ein Verfahren zur Errichtung von mehrschichtigen Außenwänden, eines Bauwerkes, mittels Schalungselementen, welche mit Isoliereinlagen ausgebildet sind. Dabei ist der Innenraum der Schalungselemente (1) in Längsrichtung der Wände mittels einer Schicht aus einem wärmeisolierenden Material in zwei Bereiche unterteilt, wobei in den an der Außenseite der Wand liegenden Bereich eine Schicht aus einem gut wärmeleitenden Material eingebracht wird und in den an der Innenseite der Wand liegenden Bereich eine Schichte aus einem wärmespeichernden Material eingebracht wird und wird mindestens in die Schichte aus wärmespeicherndem Material ein Rohr zur Leitung eines Trägermediums für Wärme oder Kälte eingebracht.

Eine in einem Umweltkollektor gewonnene Wärme und Kälte kann dann zur Klimatisierung von in Bauwerken befindlichen Räumen herangezogen werden, sofern das vom Umweltkollektor abgegebene Trägermedium zur Erwärmung oder Abkühlung von Wänden des Bauwerkes verwendet wird.

Es ist eine Aufgabe der vorliegenden Erfindung ein Bauwerksteil bereitzustellen, bei dem die Klimatisierung leicht steuerbar ist und gleichzeitig der dazu benötigte Energiebedarf niedrig gehalten wird.

Diese Aufgabe wird erfindungsgemäß mittels eines Bauwerksteils aus Bauwerkselementen in Fachwerkbauweise gemäß Anspruch 1 gelöst, wobei ein Bauwerkselement umfasst: ein Stabtragwerk mit Stützen- und/oder Riegelelementen sowie dazwischen angeordneten Ausfachungselementen, bei dem/denen zumindest ein Stützenelement und/ oder ein Riegelelement im Innenquerschnitt Leitungen mit einem darin befindlichen Arbeitsfluid aufweisen,wobei das zumindest eine Stützen- und/oder das zumindest eine Riegelelement als Kondensator oder Verdampfer einer reversiblen Kraftwärmemaschine integriert ist, indem in die Leitungen mittels Ventilen eine Kompressor- und/oder Expansionsventileinheit zwischengeschaltet sind, wobei zumindest ein Entfeuchtungskanal im Bauwerksteil vorgesehen ist, der zwischen dem Stabtragwerk und einer Platte oder einem weiteren Stabtragwerk angeordnet ist, und der einen darin zur Temperaturregulierung vorgesehenen Luftkanalkollektor aufweist, wobei der Luftkanalkollektor eine Leitung mit einem darin befindlichen Arbeitsfluid umfasst, sodass zumindest einer der Entfeuchtungskanäle im Bauwerksteil als Kondensator oder Verdampfer der reversiblen Kraftwärmemaschine betreibbar ist. Ein solches Stabtragwerk ermöglicht auf einfache Art und Weise Energie in ein gewünschtes Bauwerksteil: Wand-, Decken-, Böden-, Fundament-, Dachkonstruktionen und dergleichen und/oder dem Bauwerksteil selbst zu transportieren. Darüber hinaus wirken die einzelnen Stützen- und/oder Riegelelemente wie Massivabsorber und/oder Energieleiter. So kann über die Leitungen mittels des Arbeitsfluids transportierte Energie dann an den gewünschten Ort durch Wärmeleitung von dem Arbeitsfluid auf das Stabtragwerk und von dort aus weiter auf die Ausfachungselemente übertragen werden. Ein besonders Vorteil zum Transport und Verteilung der Energie wird mittels Stäben und/oder Rasterstäben durch Einsatz von Baumaterialien mit hoher Wärmeleitfähigkeit erreicht. Durch ein Zwischenschalten von Kompressor- und Expansionsventileinheiten an vorbestimmten Stellen in den/die Leitungen können die einzelnen Bauwerkselemente als Verdampfer oder Kondensator einer reversiblen Kraftwärmemaschine aktiviert bzw. genutzt werden. Dieses ist ein besonderer Vorteil, zumal keine separaten bzw. zusätzlichen Vorrichtungen notwendig sind, die die Funktionen einer Kraftwärmemaschine erfüllen. Dabei wird bei einer Wärmequelle von einem "Verdampfer" und bei einer Wärmenutzungsanlage, also einer Wärmesenke, von einem "Kondensator" gesprochen.

Eine Kraftwärmemaschine - auch Kraftwärmepumpe genannt - ist eine Maschine, die unter Aufwendung von technischer Arbeit thermische Energie aus einem Reservoir mit niedrigerer Temperatur - in der Regel ist das die Umgebung - aufnimmt und - zusammen mit der Antriebsenergie - als Nutzwärme auf ein zu beheizendes System mit höherer Temperatur, beispielsweise einer Raumheizung überträgt. Der verwendete Prozess ist im Prinzip die Umkehrung eines Wärme-Kraft-Prozesses, bei dem Wärmeenergie mit hoher Temperatur aufgenommen und teilweise in mechanische Nutzarbeit umgewandelt und die Restenergie bei niedrigerer Temperatur als Abwärme abgeführt wird, meist an die Umgebung. Das Prinzip der Kraftwärmemaschine verwendet man auch zum Kühlen (so, wie beim Kühlschrank), während der Begriff "Wärmepumpe" nur für das Heizaggregat verwendet wird. Beim Kühlprozess ist die Nutzenergie die aus dem zu kühlenden Raum aufgenommene Wärme, die zusammen mit der Antriebsenergie als Abwärme an die Umgebung abgeführt wird. Auf eine detaillierte Funktionsweise einer herkömmlichen Kraftwärmemaschine wird im Rahmen dieser Offenbarung abgesehen, zumal die Wirkungsweise allgemein bekannt ist.

Darüber hinaus sind reversible Kraftwärmemaschinen die zum Heizen oder Kühlen verwendet werden, günstig in ihrer Anschaffung, sparsam beim Betrieb, lautlos und besonders umweltverträglich. Auf diese Art und Weise kann besonders einfach Klimatisierungsenergie gespart werden, zumal ca. 3/4 der Heizungsenergie gratis aus der Umwelt z.B., als Sonnenenergie oder Geothermie bezogen werden kann. Demnach nutzen Kraftwärmemaschinen die kostenlose latente erneuerbare Wärme aus Umgebungsluft, Wasser oder Sonnenwärme. Mittels der Kraftwärmemaschine wird die mithilfe von Wärmetauschern aufgenommene Umgebungswärme auf das für bestimmte Heizzwecke gewünschte Temperaturniveau angehoben. Danach kann die in dem Arbeitsfluid gespeicherte Energie über die Leitungen im Innenquerschnitt der Bauwerkselemente an den gewünschten Ort im Bauwerksteil/Gebäude transportiert werden, und dort an die betreffenden Bauwerkselemente sowie weiteren Bauwerksteile abgegeben werden.

Ein weiterer großer Vorteil von solchen Kraftwärmemaschinen ist, dass diese ohne wesentlichen Mehraufwand an Investitions- oder Betriebskosten gleichzeitig zur Lüftung, Kühlung bzw. Erwärmung und Entfeuchtung in den damit bestückten Gebäuden genutzt werden können. Schließlich sind reversible Kraftwärmemaschinen so ausgelegt, dass sie zusätzlich mit der Wärme der Abluft in Kälteperioden heizen bzw. in Hitzeperioden klimatisieren können. Damit weist die Kraftwärmemaschine - bei optimaler Auslegung - die derzeit niedrigsten Betriebskosten auf, die mit jeder Energiepreissteigerung bei den fossilen Primärenergieträgern in Relation dazu noch billiger werden.

Die hier beschriebenen Kraftwärmemaschinen sind auch für einen Umkehrbetrieb geeignet. Sie können je nach Bedarf eine Heiz- oder Kühlfunktion erfüllen. Dabei ist die Natur der Ausführung der Vorrichtung für den Umkehrbetrieb nebensächlich. Eine Ausführung kann beispielsweise über ein Vier-Wege-Ventil oder elektrische Ventile steuerbar sein, d.h. vom Kondensator des Heizbetriebs zum Verdampfer und vom Verdampfer des Heizbetriebs zum Kondensator, wobei der Kompressor die Förderrichtung beibehalten kann. Darüber hinaus ist es möglich Kraftwärmemaschinen zu kaskadieren - dem mehrfachen Hintereinanderschalten/Verketten solcher Kraftwärmemaschinen -, wodurch eine Erhöhung des Wirkungsgrades erreichbar ist.

Ein besonderer Vorteil, der sich gegenüber der Druckschrift DE 10 2004 023 268 B4 ergibt, liegt in einer Überbrückung von langen Latenzzeiten - die auf Grund einer dem herkömmlichen Mauerwerk inhärenten Trägheit bedingt sind und die bei einer Energieübertragung/Wärmeübertragung innerhalb eines Mauerwerks auftreten - in dem die aus der Umwelt aufgenommene Energie schnell über die vorhandenen Leitungen an den gewünschten Ort im Gebäude bzw. den Bauwerkselementen transportiert werden kann. Ein weiterer Vorteil liegt darin, dass die das Arbeitsfluid enthaltenden Leitungen in den Bauwerksteilen nicht gedämmt werden müssen, da ein mögliches auftretendes Kondenswasser von den die Leitungen umgebenden Massivabsorbern sofort abgeführt wird.

Aufgrund der Möglichkeit eines reversiblen Betriebs der Kraftwärmemaschine erfolgt beispielsweise eine Kühlung an einer gewünschten Stelle eines Bauwerksteils, in dem das Bauwerksteil als Verdampfer der Kraftwärmemaschine genutzt wird.

In einer bevorzugten Ausführungsform der Erfindung ist das Stabtragwerk mit Stützen- und/oder Riegelelementen mit den dazwischen angeordneten Ausfachungselementen thermisch koppelbar. Auf diese Weise kann eine Wärmeleitung gewährleistet werden. Sie findet zwischen Körpern mit unterschiedlichen Temperaturen statt, die durch eine feste, flüssige oder gasförmige Substanz miteinander verbunden sind.

In einer besonders bevorzugten Ausführungsform weisen die Ausfachungselemente und/oder das Stabtragwerk einen hohen Wärmeübertragungskoeffizient auf. Ein hoher Wärmeübertragungskoeffizient spricht für einen guten Wärmeleiter. Dadurch wird eine besonders effiziente und effektive Übertragung von Energie ermöglicht und die Latenzzeiten bei der Einstellung einer gewünschten Temperatur in oder an einem bestimmten Bauwerksteil erheblich verkürzt. Insbesondere lässt ein in die Riegel und/oder Stützen eingebauter Baustahl eine viel bessere Energieleitung und Energieverteilung zu.

Besonders zweckdienlich ist es, wenn die Ausfachungselemente und/oder das Stabtragwerk und/oder ein Entfeuchtungskanal als Energiepuffer wirken. Je nach Bedarf können Sie als Verdampfer oder Kondensator der reversiblen Kraftwärmemaschine genutzt werden. Auf diese Art und Weise, kann bei der Realisierung der Kraftwärmemaschine auf weitere separate Vorrichtungen, die als Verdampfer oder Kondensator agieren, verzichtet werden und dadurch gleichzeitig Bauraum eingespart werden.

Bei einer weiteren vorteilhaften Ausführungsform sind die Ausfachungselemente derart ausgebildet, dass Sonnenenergie und/oder Umgebungsenergie und/oder Raumenergie in Form von Wärme und/oder Feuchte darin speicherbar ist. Dadurch sind die Ausfachungselemente sehr flexibel einsetzbar.

Ausfachungselemente die ein oder mehrere der Materialien wie Lehm, Leichtlehm, Erde und/oder gebrannter Ziegelstein und/oder Kalksandstein und/oder Holz umfassen sind besonders kostengünstig, umweltfreundlich wobei sie eine Behaglichkeit in einem vom Menschen bewohnten Raum erhöhen und besonders natürlich wirken. Darüber hinaus weisen diese Materialien einen hohen Wärmespeicher- und Wärmeübertragungskoeffizient auf, der eine schnelle und effiziente Energieübertragung erlaubt. Zusätzlich sind die genannten Materialien an fast jedem Ort dieser Welt vorhanden und können je nach Bedarf leicht mit anderen Materialien verarbeitet werden, um gewünschten physikalischen Eigenschaften wie Dichte, Gewicht, Feuchteaufnahmefähigkeit, Wärmeleitfähigkeit usw. zu entsprechen.

Um eine besonders gute thermische Kopplung der einzelnen Bauwerkselemente zu erreichen, weisen die Oberflächen der Ausfachungselemente Außenprofile auf, die ausgebildet sind in ihrer Form komplementär zu jeweils mit ihnen in Berührung stehenden Oberflächen der Stäbe, der Stützen- und oder Riegel zu passen. Die komplementäre Ausbildung der Profile ermöglicht zudem einen besonders kompakten Zusammenbau der einzelnen Bauwerkselemente, was wiederum zu einer Erhöhung der Stabilität und damit Sicherheit des gesamten Bauwerksteils/Gebäudes beiträgt. Dies erfolgt analog im Hinblick auf die Druckschrift DE 10 2004 023 268 B4 und dem darin beschriebenen Stabtragwerk.

Dadurch, dass Bauwerksteile, insbesondere Wand-, Decken-, Böden-, Fundament-, Dachkonstruktionen und dergleichen mittels der Bauwerkselemente herstellbar sind, können diese auch jeweils als Kondensator oder Verdampfer in einer reversiblen Kraftwärmemaschine integriert werden. Dadurch wird die Effizienz noch einmal erheblich erhöht, zumal unterschiedliche Bauteile auch unterschiedlichen Energie- bzw. Temperatureintragungen aus der Umwelt ausgesetzt sind. Durch gezieltes Ansteuern der einzelnen Bauwerksteile kann somit ein Wirkungsgrad eines Klimatisierungsvorgangs erhöht werden. Schließlich gilt es, in jeder Situation die Wärmequellen mit dem höchstmöglichen Temperaturniveau zu nutzen, da dadurch maximale Leistungszahlen erreicht werden und damit die Klimatisierungskosten optimiert werden können.

Abgesehen von den "Wärmequellen" der Gebäude-Bauwerksteile können auch das Erdreich, Wasser und die Luft als Wärmequelle für eine Heiz-Kraftwärmemaschine genutzt werden.

In einer weiteren vorteilhaften Ausführungsform sind mehrere Stabtragwerke parallel zueinander angeordnet. Besonders vorteilhaft ist eine solche Anordnung bei Außenwandkonstruktionen von Gebäuden anzuwenden, da hierbei ein Energietransport besonders schnell von einer an die Umwelt angrenzenden Oberfläche der Wand hin zu einer Oberfläche eines Innenraumes der Wand des Gebäudes transportiert werden kann. Durch die doppelte Anordnung des Stabtragwerkes wird die aus dem äußeren Umfeld aufgenommene Energie - beispielsweise Solarenergie - über die Leitungen des an der äußeren Oberfläche der Wand angrenzenden Stabtragwerks schnell in das dazu parallel angeordnete Stabtragwerk transportiert, das zusammen mit ihrer dazugehörigen Ausfachung an die mit dem Innenraum des Gebäudes in Verbindung stehende Wandoberfläche angrenzt. Somit wird die Latenzzeit der Wärmeübertragung von der an die äußere Umwelt angrenzende Oberfläche ankommende Wärmeenergie hin zu der mit dem Innenraum des Gebäudes in Verbindung stehenden Oberfläche der Mauer/Wand erheblich verkürzt.

Ein weiterer Vorteil der Ausführungsform besteht in der höheren statischen Belastbarkeit der durch die parallel angeordneten Stabtragwerke gebildeten Wand.

Besonders einfach kann die Energie zwischen den Bauwerksteilen mittels eines Arbeitsfluids durch die Leitungen transportiert werden. Das Arbeitsfluid selbst kann dabei Wasser, Propangas, usw. sein. Beschränkungen diesbezüglich sind nur durch die jeweilige Norm- und Gesetzgebung gegeben.

Je nach Energiequelle oder Energiesenke ist es vorteilhaft, wenn einzelne oder mehrere Bausteine und/oder Bauwerksteile als Einkreis-Kraftwärmemaschine und/oder als Mehrkreis-Kraftwärmemaschine betreibbar sind. Auf diese Weise kann den gesetzlichen Beschränkungen leicht Rechnung getragen werden, wenn besondere Vorkehrungen zur Vermeidung von beispielsweise einer Kontamination des Umfelds zu treffen sind. Dabei wird eine Mehrkreis-(Zweikreis)-Kraftwärmemaschine nur dann betrieben, wenn gesetzliche Einschränkungen dieses zwingend notwendig machen. Bevorzugt werden Einkreis-Kraftwärmemaschinen eingesetzt, da diese einen höheren Wirkungsgrad beim Betrieb aufweisen (Kaskadierung der Kraftwärmemaschinen).

Eine weitere bevorzugte Ausführungsform der Erfindung sieht vor, dass die Kraftwärmemaschine an Sonnenenergie- und/oder, Geothermie- und/oder Windenergie und/oder Wasserenergieanlagen koppelbar ist. In besonderen Ausnahmefällen ist es dadurch möglich ein Gebäude mit den genannten Bauwerksteilen zu realisieren, das vollkommen autark von einer externen Energiezufuhr ist. Dieses ist besonders dann von Vorteil, wenn sich einzelne Gebäude isoliert von einem Energienetz befinden, beispielsweise in nicht dicht besiedelten oder gering erschlossenen Gebieten. Erfindungsgemäß ist das Bauwerksteil mit zumindest einem Entfeuchtungskanal vorgesehen. Der Entfeuchtungskanal dient dabei der Vermeidung von Schimmelpilzbildung sowie von Kondensation von Wasser aufgrund von sich ausbildenden Kältebrücken. Bei einer Weiterbildung mit Hinblick auf die Druckschrift DE 10 2004 023 268 B4 kann mittels des Entfeuchtungskanals, der zwischen einer Anordnung von zwei parallel angeordneten Stabtragwerken vorgesehen ist, zusätzlich auch eine Dämmungsfunktion erfüllt werden, wobei durch den Entfeuchtungskanal - je nach Bedarf - Luft unterschiedlicher Temperatur und Feuchte durchgeleitet wird, um die Wärmeübertragung bzw. eine Richtung der Wärmeübertragung in den einzelnen Mauerteilen beeinflussen zu können.

Erfindungsgemäß ist zumindest einer der Entfeuchtungskanäle im Bauwerksteil als Kondensator oder Verdampfer einer reversiblen Kraftwärmemaschine betreibbar. Darüber hinaus können die Entfeuchtungskanäle als Energiepuffer wirken. Einerseits erfüllen sie eine Dämmfunktion zwischen verschiedenen Teilen/Flächen im Inneren des Bauwerkteils, andererseits können sie auch zur Beschleunigung des Energietransports beitragen, indem sie als Energieüberträger wirken - wie das Arbeitsfluid in den verherstehend genannten Leitungen, wobei die Energie in die oder aus den massiven Bauteilen getragen wird.

Ein weiterer Aspekt der Erfindung betrifft ein Gebäude welches zumindest teilweise aus den oben beschriebenen erfindungsgemäßen Bauwerksteilen hergestellt wird. Damit lässt sich besonders einfach ein Niedrigenergiehaus sowie bioenergetisches Gebäude realisieren.

Ein weiterer Aspekt der vorliegenden Erfindung betrifft ein Verfahren zum Betreiben eines Gebäudes gemäß oben ausgeführten Ausführungsformen, bei dem die Temperatur zumindest einer Oberfläche des Bauwerkteils (1) und/oder des Gebäudes gesteuert wird, mittels Bauwerkselementen, die Stützen- und Riegelelemente sowie dazwischen angeordnete Ausfachungselemente umfassen, bei denen zumindest ein Stützenelement und/oder ein Riegelelement und/oder ein Entfeuchtungskanal im Innenquerschnitt Leitungen mit einem darin befindlichen Arbeitsfluid aufweisen, wobei die einzelnen Stützen- und/oder Riegelelemente - über zumindest eine in die Leitungen zwischengeschaltete Kompressor- und Expansionsventileinheit - als Kondensator oder Verdampfer einer reversiblen Kraftwärmemaschine wirken. Die im Zusammenhang mit dem Gebäude beschriebenen Vorteile und Ausführungsformen gelten gleichermaßen für das Verfahren zum Betreiben des Gebäudes selbst.

Besonders effizient lässt sich ein Gebäude mittels eines Verfahrens gemäß einer Ausführungsform der Erfindung betreiben, indem zumindest eine Kraftwärmemaschine in steuerbaren diskreten Zeitabständen betrieben wird. Zum Einsparen von Antriebsenergie für die Kraftwärmemaschine empfiehlt es sich diese nicht kontinuierlich laufen zu lassen sondern lediglich in diskreten Zeitabständen anzusteuern. Die Steuerung kann unter Berücksichtigung der auftretenden Latenzzeiten erfolgen, die bei der Wärmeübertragung innerhalb und zwischen den einzelnen Bauwerkselementen auftreten. Darüber hinaus wird die reversible Kraftwärmemaschine je nach Bedarf in Heiz- oder Kühlfunktion betrieben. Thermostatventile - bidirektional - müssen dazu auch für den Kühlbetrieb geeignet sein.

Wesentlich ist es dabei, unerwünschte Kondensatbildung zu vermeiden. Deswegen wird eine Temperatur des Arbeitsfluids im Wesentlichen so eingestellt, dass eine Kondenswasserbildung im angrenzenden Bereich der Leitungen vermieden wird. So kann der unterschiedlichen Wärmeleitfähigkeit von Baumaterialen Rechnung getragen werden, die die Leitungen umgeben.

Ein weiteres Ziel der Erfindung ist es eine möglichst effektive und effiziente Energieaufnahme und Verteilung innerhalb eines Bauwerkteils oder eines Gebäudes zu erreichen.

Ein weiterer Zweck der Erfindung ist es allerdings auch ein bestehendes Klima in einem Raum aufrecht zu erhalten - einen im technischen Umfeld noch als "steady state" oder eingeschwungenen Zustand bezeichneten Zustand. Dabei wird in einer bevorzugen Ausführungsform der Erfindung einem Bauwerksteil nur so viel Energie zugeführt bzw. entzogen, dass eine Schwankung der Temperatur - beispielsweise im Innenraum eines Gebäudes nur sehr gering ausfällt. Um eine Kraftwärmemaschine dabei energieschonend und wirtschaftlich zu betreiben, besteht sie aus bestimmten Bauwerksteilen des Gebäudes und/oder externen Nebenbauwerken und/oder Bauwerkteilen die untereinander gekoppelt sind und einzeln über Rechner ansteuerbar sind. Die einzelnen Bauwerksteile werden nicht kontinuierlich betrieben, sondern nur zu diskreten Zeitpunkten. Dabei macht man sich die verhältnismäßig langen Latenzzeiten der trägen Energieübertragung in Bauwerksteilen durch Konvektion zu Nutze. Zur Bestimmung eines optimalen Wirkungsgrades können von Rechnern gesteuerten Anlagen vorgesehen werden. Eine Ausführung darüber, wie diese eingestellt werden und funktionieren wäre an dieser Stelle redundant, da diese Aufgabe die meisten herkömmlichen Klimatisierungsanlagen bereits vermögen. Dabei gibt es Fälle, in denen der Energieeintrag dem Energieaustrag im Verlauf eines Tages bzw. über die Jahreszeiten hinweg überwiegt. In diesen Fällen kann sogar Energie gespeichert werden, die zu einem späteren Zeitpunkt genutzt werden kann.

Als weitere Eingriffsmöglichkeit in den Ablauf der Energieübertragung kommen konstruktive Maßnahmen bei den Bauwerksteilen in Frage. Diese betreffen die Geometrie der Bauteile und/oder die physikalischen Eigenschaften ihrer Materialien. So kann beispielsweise ein Steg bedarfsweise aus einem Wärmeisolierenden oder - leitenden Material hergestellt werden. Eine besonders hohe Energieübertragung kann erreicht werden, wenn die Stützenelemente des Tragwerks an ihrer Mantelfläche gerippt ausgebildet werden und dazugehörige Stäbe und/oder Riegelelemente aus Baumaterial hergestellt werden, wobei sie eine mehrfach höhere Wärmeleitfähigkeit relativ dazu aufweisen.

Im Hinblick auf eine Materialwahl und Gestaltung weiterer Bauwerksteile wird erneut auf die Ausführungen in der DE 10 2004 023 268 B4 Bezug genommen, wobei lediglich ein oder mehrere Bauwerksteile gemäß Ausführungsbeispielen dieser Erfindung mit Leitungen in ihren Querschnitten versehen werden müssen. Dieses betrifft alle Bauwerksteile umfassend insbesondere Wand-, Decken-, Böden-, Fundament-, Dachkonstruktionen und dergleichen mittels der genannten Bauwerkselemente.

Ein Ziel ist es einen Taupunkt möglichst zu vermeiden oder ihn im Falle eines eventuellen Auftretens an einen Ort zu verschieben, wo ein dadurch entstehendes Kondenswasser möglichst schnell abgefangen oder weiter geleitet werden kann - beispielsweise im oder in einem unmittelbar angrenzenden Bereich von Entfeuchtungskanälen. Die Entfeuchtungskanäle des Bauwerksteils verlaufen parallel zu den Stegen die sie umgeben. Dadurch kann eine Lüftung sowie eine Befeuchtung und Entfeuchtung der angrenzenden Bauwerksteilelemente gewährleistet werden.

Ein weiterer Zweck der Erfindung ist es die Oberflächentemperaturen an den Bauwerkteilen, die an den Innenraum angrenzen, gleich zu halten. Diese Funktion der Erfindung ergibt sich durch die Bauart schon automatisch, da energieleitende Stabtragwerke aus energie- bzw. temperaturleitendem Baumaterial hergestellt sind, die die Temperatur an allen Innenoberflächen abgleichen.

In dem Fall, dass die Stabtragwerke die Funktion von Kollektoren erfüllen, können mittels der durch die Leitungen fließenden Arbeitsfluids die Temperaturen der Innenoberflächen exakt abgeglichen werden. Somit wird eine Bildung von Schimmelpilz an den Innenoberflächen verhindert.

Durch die Integration der oben genannten Bauwerksteile bei Gebäuden lassen sich fossile Energiereserven sparen, die Umwelt schonen und ein natürliches dem Menschen wohltuendes Klima in Gebäuden schaffen.

Im Folgenden werden die Erfindung und einige Ausführungsformen anhand einer Zeichnung näher erläutert. Gleiche Bezugszeichen in unterschiedlichen Figuren stehen für Bauteile gleicher Funktion oder Konstruktion.

Dabei zeigen:

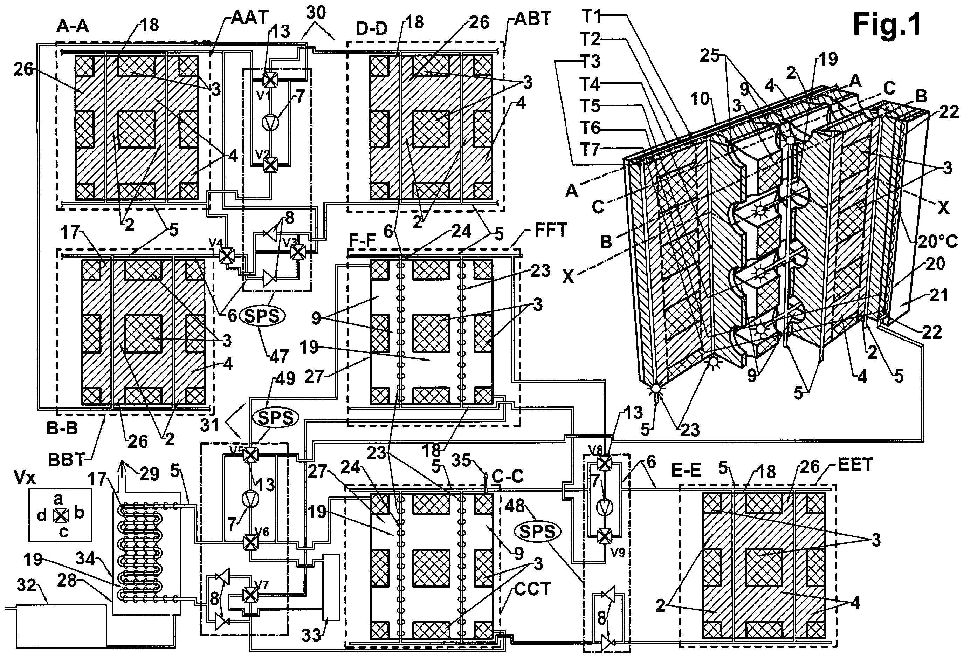

- Fig. 1: eine skizzenhafte Darstellung eines Bauwerkteils in einer perspektivischen Ansicht zweier senkrechter Schnitte zur Bauteilsebene - hier eines Wandelements - unter Veranschaulichung zweier Beispiele eines Funktionsprinzips einzelner Bauwerkselemente gemäß einer Ausführungsform der Erfindung; und

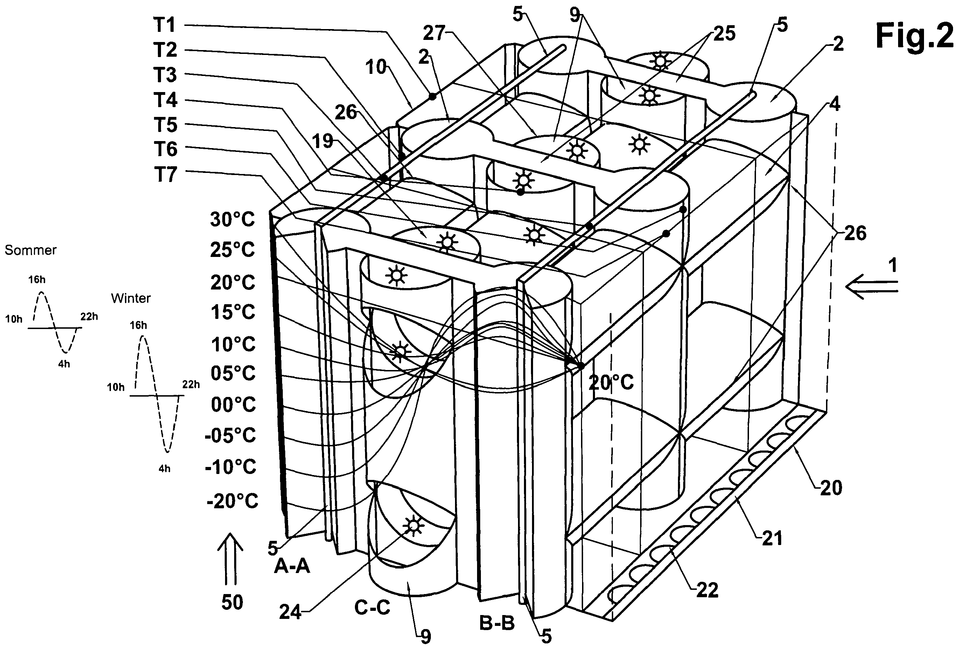

- Fig. 2: eine skizzenhafte Darstellung eines Bauwerkteils in einer perspektivischen Ansicht zweier senkrecht zur Bauteilebene verlaufender Schnitte mit Veranschaulichung möglicher Temperaturverläufe - Tag und Nacht-Amplituden - innerhalb eines Schnittes des Bauteils gemäß einer Ausführungsform der Erfindung; und

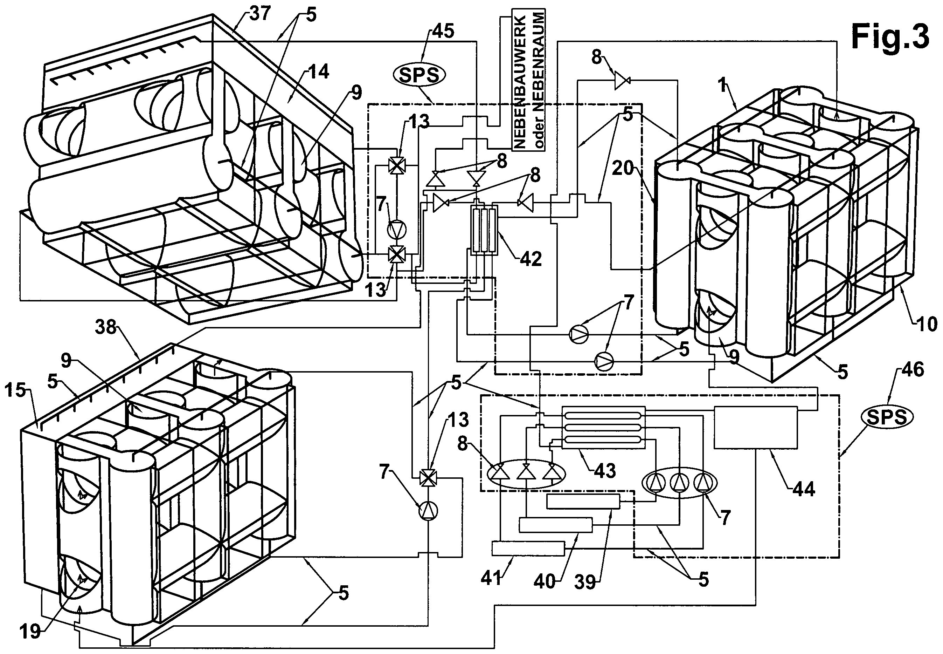

- Fig. 3: eine skizzenhafte Darstellung von Mehrstufigen-Kraftwärmemaschine in einem Komplex aus mehreren Bauwerkteilen, wobei in einer Ausführungsform der Erfindung Gas-Gas und einer weiteren Ausführungsform der Erfindung eine mit Gas-Flüssigkeit offenlegt ist.

In den Figuren wurden zugunsten einer besseren Übersicht nicht sämtliche Bezugszeichen angegeben, sofern sich einzelne Elemente mehrfach wiederholen.

Fig. 1 zeigt ein Bauwerksteil 1 in Fachwerkbauweise in einer perspektivischen Schnittansicht X-X und mehrere paralleler Schnitte AA, BB, CC von dem Bauwerkteil 1 - hier parallel zu einer Ebene eines Wandelements, sowie senkrechte Schnitte DD und EE von externen Bauwerkteilen, einem Luftkanalkollektor 24 CC in den Entfeuchtungskanälen 9 von dem Bauwerkteil 1 und einem Luftkanalkollektor 24 FF in den Entfeuchtungskanälen 9 eines externen Bauwerkteils. Bei dem dargestellten Bauwerksteil 1 handelt es sich um die Ausführungsform eines Wandelements, wie es beispielsweise in der DE 10 2004 023 268 B4 in ähnlicher Form ausgeführt ist. Im Unterschied zu der in der DE 10 2004 023 268 B4 dargestellten Ausführungsform des Wandelements weisen die Stützenelemente 2 und/oder Riegelelemente 4 eines Stabtragwerks AA, BB, DD und EE und die Entfeuchtungskanäle 9 mit Luftkanalkollektoren 24 FF und CC in ihren Querschnitten Leitungen 5 für den Transport eines Arbeitsfluids auf.

Das in der Figur 1 dargestellte Wandelement - Bauwerkteil 1 - könnte beispielsweise ein Teil einer Außenmauer eines Gebäudes sein, wobei eine erste Wandoberfläche 10 natürlichen klimatischen Umweltbedingungen ausgesetzt ist, wie sie außerhalb eines Gebäudes auftreten, und eine zweite Wandoberfläche 20 eine Innenfläche eines Gebäudes darstellt, wie sie beispielsweise in einem Gebäudeinnenraum auftritt.

Das hier dargestellte Bauwerksteil 1 - Wandelement - ist wie folgt aufgebaut: eine äußere Wandoberfläche 10 wird von einer Putzschicht 11 oder Fassade-Montageelementen gebildet. Diese grenzt an ein erstes Stabtragwerk, welches durch Stützenelemente 2 und Riegelelemente 4 gebildet wird. Die einzelnen Stützenelemente 2 und Riegelelemente 4 bilden einen Rahmen für darin angeordnete Ausfachungselemente 3. Über eine Zwischenschicht - hier durch die Schnittebene CC angedeutet - ist das erste Stabtragwerk - hier durch die Schnittebene AA angedeutet - mit einem zweiten dazu parallel angeordneten Stabtragwerk - hier durch eine Schnittebene BB angedeutet - verbunden. Das zweite Stabtragwerk BB umfasst gleiche Stützenelemente 2 und gleiche Riegelelemente 4, wie das erste vorstehend genannte Stabtragwerk AA. Über einen Putz 21 der als Wandoberfläche 20 vorgesehen ist, grenzt das Wandelement an einen Innenraum des Gebäudes - nicht dargestellt.

Die beiden Stabtragwerke AA, BB - die in den parallel zueinanderstehenden Schnittebenen AA beziehungsweise BB angeordnet sind - sind über Stege 25 miteinander verbunden. Auf diese Weise wird zwischen den beiden Stabtragwerken, die das Wandelement bilden, ein Zwischenraum CC geschaffen, der eine Belüftung über Entfeuchtungskanäle 9 erlaubt. Gleichzeitig entsteht durch die Verbindung der beiden Stabtragwerke über die Stege 25 eine statisch äußerst widerstandsfähige und tragfähige Struktur des damit versehenen Gebäudes.

Sowohl die senkrechten Stützenelemente 2 des ersten Stabtragwerks AA als auch die Stützenelemente 2 des zweiten Stabtragwerks BB und Luftkanalkollektoren FF und CC, weisen Leitungen 5 auf die ein Arbeitsfluid 6 aufnehmen können. Parallel zu Stützenelementen in den Zwischenraum CC für Belüftung der Entfeuchtungskanäle 9 ist Luftkanalkollektor 24 eingebaut der aus rostfreien Kanaloberflächen-Schutz- und Energieverteilungshülle 23 mit daran haftenden Leitungen 5 zusammengesetzt ist. Die einzelnen Leitungen 5 sind aus einem temperaturleitfähigen Material hergestellt und dienen einem Transport von Energie - Wärme - der mittels des Arbeitsfluids 6 bewerkstelligt wird. Dabei wird das Arbeitsfluid 6 in einem geschlossenen Kreislauf bewegt, wobei es nacheinander verschiedene Aggregatzustandsänderungen erfährt. Dazu ist zumindest eine in die Leitungen 5 zwischengeschaltete Kompressoreinheit 7 und/oder Expansionsventileinheit 8 vorgesehen, die als Kondensator 17 und/oder als Verdampfer 18 einer reversiblen Kraftwärmemaschine 30, 31 wirkt.

Dadurch, dass die Kraftwärmemaschine 30, 31 reversibel betrieben werden kann, ist es möglich im Bauwerksteil 1 - Wandelement - je nach Bedarf einen Energietransport bidirektional durchzuführen. Der besondere Vorteil liegt dabei darin, dass beispielsweise die Sonnenenergie und/oder Umgebungsenergie und/oder Raumenergie genutzt werden kann um eine gewünschte klimatische Einstellung im Gebäude vorzunehmen. Ausreichender Wärmeenergieertrag wird aus sämtlichen Nebenbauwerkteilen und/oder Nebenbauwerken angesammelt, wie dies beispielsweise in der Fig. 1 dargestellt ist, wobei das Bauwerkteil 1 mit externen Bauwerkteilen gekoppelt ist, die durch die Schnitte ABT, FFT und EET dargestellt sind.

Über Zwischenspeicherungsschritte kann die Energie an einen beliebigen Ort eines Gebäudes transportiert werden, welches Bauwerksteile 1 umfasst, die die hier beschriebenen Eigenschaften aufweisen. D. h. in anderen Worten, dass ein Energiefluss in, zu und aus Bauwerksteilen wie Wand-, Decken-, Böden-, Fundament-, Dachkonstruktionen und dergleichen nach Bedarf erfolgt und über eine Steuerung eingestellt werden kann. Dabei sind die einzelnen Bauwerksteile, beispielsweise wie in der DE 10 2004 023 268 B4 ausführbar, mit dem Unterschied, dass einzelne oder alle Stützenelemente 2 und/oder Riegelelemente 4 und/oder Luftkanalkollektoren 24 über Leitungen 5 in ihren Querschnitten verfügen, über die sie miteinander energetisch koppelbar sind.

Durch den Energietransport durch die Leitungen 5 kann sichergestellt werden, dass innerhalb des gesamten Gebäudes eine gewünschte Temperatur eingestellt werden kann und/oder eine im Wesentlichen gleichmäßige Temperaturverteilung in den einzelnen Bauwerksteilen 1 beziehungsweise Bauwerkselementen des Gebäudes einstellbar ist. Dadurch wird die Bildung von unerwünschten Kältebrücken beziehungsweise Kondenswasser vermieden.

Des Weiteren lässt sich überschüssig aufgenommene Umgebungsenergie zwischenspeichern und zeitverzögert wieder verwenden - eben dann, wenn sie gebraucht wird. Auf diese Weise kann weitestgehend bzw. in einem idealen Fall vollständig auf fossile oder elektrische Energieträger verzichtet werden, wobei die Natur und Umwelt gleichzeitig entlastet und geschützt wird.

In Figur 1 werden des Weiteren zwei reversible Kraftwärmemaschinen 30, 31 dargestellt, bei denen - je nach Betriebsrichtung - einzelne Bauwerkselemente des Bauwerksteils 1, und/oder daran gekoppelte Bauwerkselemente von externen Bauwerkteilen ABT, FFT und EET, im eigenem Querschnitt als Kondensator 17 beziehungsweise Verdampfer 18 einer Kraftwärmemaschine 30, 31 genutzt werden. In den Veranschaulichung der Kraftwärmemaschinen 30, 31 sorgen bidirektionale Expansionsventileinheiten 8 beziehungsweise Kompressoreinheiten 7 für den reversiblen Betrieb der Kraftwärmemaschinen 30, 31.

Im Folgenden wird beispielhaft der Energietransport von einem Teil eines Querschnittes AAT einer Außenwand, die als Verdampfer 18 wirkt, über einem zweiten Teil eines Querschnittes BBT der Außenwand dargestellt, der als Zwischenspeicher und Kondensator 17 wirkt. Die Wandteile werden als Kasten AAT, BBT in der Figur 1 vereinfacht gezeigt. Dabei sind die Bezugszeichen AAT, BBT in Anspielung an die vorhin genannten zwei zueinander parallel stehenden Stabtragwerke - in den Schnittebenen AA, BB - gewählt.

Analog dazu sind weitere in der Figur 1 dargestellten Kästen abstrahierend für eine Parallel zu und zwischen den beiden Stabtragwerken AA, BB angeordneten Zwischenraum CCT in der Schnittebene CC, sowie ein an die Innenwand BBT angrenzender und mit dem Innenraum in Verbindung stehender luftdurchlässiger Unterputz 21 als hinterlüftete Wandoberfläche 22 gewählt.

Bei der Kraftwärmemaschine 30 handelt es sich um mehrere vereinfacht dargestellte Einkreis-Direkt-Kraftwärmemaschinen die über eine SPS-Steuerung (Speicherprogrammierbare Steuerung) in einer Kraftwärmemaschine 30 integriert und/oder daran gekoppelt sind, wobei so eine Kraftwärmemaschine den Wärmeenergietausch mit ihren Oberflächen im Bereich BB gegenüber einem Innenraum direkt bewerkstelligt. Die in der Fig. 1 dargestellte Kraftwärmemaschine 30 zeigt einen Sonnenenergie- und/oder Umgebungsenergie-Wärmeabsorber AAT, wobei vom Querschnittsteil AAT die Energie aus umgebenen Medien - Sonnenenergie, Umgebungsenergie - mittels eines Energiepuffers 26 zwischengespeichert und die Funktion eines Verdampfers 18 erfüllt, wobei über die SPS-Steuerung 47 zum Heizen und zur optimalen Abgabe von Strahlungstemperatur in Innenraum über Querschnittsteil BBT, der die die Funktion eines Kondensators 17 erfüllt, transformiert wird. Weitere Teile der Mehrkreis-Direkt-Kraftwärmemaschine 30 sind auch externe Bauwerkteile wie beispielsweise einer der in Fig. 1 als Querschnitt ABT davon dargestellt ist. Die externen Bauwerkteile erfüllen die Rolle von nacheinander angeordneten Wärmeabsorbern, wobei sie als Wärmeenergiequelle und/oder als Wärmeenergieempfänger dienen können. D.h., die externen Bauwerkteile können - gekoppelt über die SPS Steuerung 47 - ihre Funktion reversibel als Verdampfer oder Kondensator erfüllen. Zum Heizen wirken sie als Verdampfer d.h. sie sind Absorber von Wärmeenergie aus umgebenden Medien und bilden zugleich als Zwischenspeicher eine Wärmeenergiequelle. Als Wärmeenergieabsorber beziehen sie Wärmeenergie aus der Umgebung z.B. Sonnenenergie, Umgebungsenergie, Geothermie, je nachdem ob sie unterhalb der Geländekante oder oberhalb der Geländekante angeordnet sind. Sie liefern zusätzlich die Wärmeenergie für eine optimale Temperatur die in den Innenraum über Querschnittsteil BBT abgestrahlt wird. In dem Fall, dass die Temperatur in Innenraum gesenkt wird, übernimmt der Querschnittsteil BBT die Rolle eines Verdampfers, wobei mittels Ventilen V1, V2, V3 und V4 die externen Bauwerkteile 1 jeweils die Rolle eines Kondensators erfüllen und einen Überschuss von Wärmeenergie aus Innenräumen an die umgebenden Medien (Außenluft, Untergrund) übertragen oder abführen.

Im vorliegenden Funktionsbeispiel wirkt das erste Stabtragwerk AA bzw. der Teil des Querschnittes AAT der Außenwand, welche an die Umwelt grenzt und einer Sonneneinstrahlung ausgesetzt ist, als Verdampfer 18 für das Arbeitsfluid 6. Die Temperatur des in einem gasförmigen Zustand befindlichen Arbeitsfluids 6 wird aufgrund der über einen Außenputz 11 an einer zur Sonne gerichteten Wandoberfläche 10 aufgenommenen Sonnenenergie und/oder Umgebungsenergie erhöht. Dabei wird von dem Teil des Querschnittes der Bauwerkteils 1 der Außenwand AAT die Sonnenenergie von den Ausfachungselementen 3 und/oder den Stützelementen 2 oder Riegelelementen 4 aufgenommen, zwischengespeichert beziehungsweise weitergeleitet. Über eine Kompressoreinheit 7 in der SPS 47 Steuerung wird das gasförmige, von der Sonnenenergie erwärmte Arbeitsfluid 6 in den Leitungen 5 des Kondensators komprimiert und im Folgenden von niedriger Temperatur auf eine optimale Temperatur für den Innenraum transformiert, in den sie abgestrahlt wird. D.h., das Arbeitsfluid wird an einen Wärmeüberträger, hier den Kondensator 17, in dem zweiten Teil des Bauwerkteils 1 der Querschnittes BBT der Außenwand gerichtet, wo die Temperatur/Wärme dem Innenraum zugeführt wird wobei das Arbeitsfluidunter Wärmeabgabe kondensiert.

Im vorliegenden Beispiel nutzt man zur Aufrechterhaltung der Temperatur an den Oberflächen des Bauwerkteils 1 den Querschnitt BBT der Außenwand in Richtung zum Innenraum abwechselnd in bestimmten Zeitabständen mit den externen Bauwerken und/oder Bauwerkteilen 1 des Gebäudes wie beispielsweise mit einem Zwischenspeicher ABT - der auch als Funktionskasten dargestellt ist, und beispielsweise als externer Wärmeenergieabsorber ausgelegt sein kann. Dabei kann man die hohe spezifische Wärmekapazität des Bauwerkteils ABT nützen, wobei mindestens ein Bauwerkteil ABT reversibel als Verdampfer/Kondensator mit dem Teil des Bauwerkteils 1 des Querschnittes BBT der Außenwand, der zum Innenraum gerichtet ist, als Kraftwärmemaschine fungieren kann. Dabei wird das nun verflüssigte Arbeitsfluid 6 aufgrund einer Druckänderung über eine Expansionsventileinheit 8 entspannt und einem der Expansionsventileinheit 8 nachgeschalteten zweiten Wärmeüberträger, hier dem Verdampfer 18, zugeführt und erneut unter Wärmeaufnahme bei niedriger Temperatur verdampft. Der Kreislauf kann nun von vorne beginnen. Dabei muss der Prozess von außen durch Zufuhr von mechanischer Arbeit über die Kompressoreinheit 7 in Gang gehalten werden. Allerdings macht die dazu notwendige Energie nur einen Bruchteil des Energieanteils aus, der beispielsweise als Sonnenenergie aufgenommen und im gesamten Gebäude transportiert werden kann. Somit lassen sich große Energieeinsparungen fossiler Energien machen.

Beim Umkehren des oben beschriebenen Energiekreislaufs wird gekühlt - die einzelnen Schritte verlaufen nun in umgekehrter Richtung, wobei eine Wärmequelle oder Wärmesenke im Bauwerksteil 1 oder Gebäude den Anforderungen an die Klimatisierung entsprechend beliebig wählbar ist. Dabei wird bei einer Wärmequelle von einem "Verdampfer" und bei einer Wärmenutzungsanlage also einer Wärmesenke von einem "Kondensator" gesprochen.

Die in dem externen Zwischenspeicher ABT gespeicherte Energie kann nun an eine beliebige Stelle innerhalb des Gebäudes weiter geleitet werden. Diese ist in der vorliegenden Ausführungsform vorteilhafterweise das zweite Stabtragwerk, wobei die Energie in dem Teil des Querschnittes BBT von der Außenwand zum Innenraum des Gebäudes geleitet wird. Dadurch kann auf einfache Weise das Klima innerhalb eines Raumes durch Abgabe oder Aufnahme von Energie gesteuert werden. Dazu tragen eine innere Wandoberfläche 20 und die in dem Teil des Querschnittes BBT der Wand zum Innenraum gehörenden Stützen- 2, Ausfachungs- 3 und Riegelelemente 4. Des Weiteren kann verhindert werden, dass eine sich bereits in dem Innenraum befindende Wärmeenergie über die Wand nach außen dringt, beziehungsweise gezielt gesteuert werden, ob ein Wärmeaustrag aus einem Innenraum erfolgen soll, indem die Wandoberfläche 20 im Innenraum abgekühlt wird.

Je nach Anforderung kann - wie bereits oben erwähnt - eine direkte Wärmezufuhr von der der Sonneneinstrahlung zugewandten Wandoberfläche 10 erfolgen, wobei das Arbeitsfluid 6 über Ventile direkt dem zweiten Stabtragwerk BB zugeführt wird, welches an den Innenraum des Gebäudes grenzt und das zweite Stabtragwerk BB als Kondensator 17 für das Arbeitsfluid 6 wirkt. Eine solche Ausführungsform ist zwar effizienter, sollte aber in Abstimmung mit den jeweiligen geltenden rechtlichen und bautechnischen Normen erfolgen, beispielsweise in Abhängigkeit der Wahl des Arbeitsfluids 6.

Eine direkte Zuführung von Energie wird in der in Figur 1 veranschaulichten Kraftwärmemaschine 31 verdeutlicht. Dabei handelt es sich um eine weitere Ausführungsform einer Kraftwärmemaschine 31 unter Verwendung von Bauwerkselementen des Bauwerksteils 1 eines Gebäudes. Wie bereits im Vorfeld besprochen, ist zwischen den zwei Schnittebenen AA, BB der beiden Stabtragwerke, die die Außenwand AAT und Innenwand BBT bilden, eine weitere Ebene CC angeordnet, die die beiden Wandteile AAT und BBT voneinander beabstandet. Sie bildet einen Zwischenraum CCT, der einen Steg 25 und Entfeuchtungskanäle 9, beziehungsweise Belüftungskanäle mit integriertem Luftkanalkollektor 24 aufweist. Dabei ist die Funktion solcher Belüftungskanäle aus der DE 10 2004 023 268 B4 bekannt, wobei ein darin hindurch geleitetes Arbeitsfluid 6 mittels des integrierten Luftkanalkollektors 24 zwecks einer Energieoptimierung zwischen den beiden Stabtragwerken AA, BB bzw. Wandanteilen des Bauwerkteils 1, AAT und BBT eingesetzt wird. Auch hierbei handelt es sich um eine reversible Kraftwärmemaschine 31.

Dabei wird in diesem Ausführungsbeispiel das Arbeitsfluid 6 genutzt, eine Temperatur eines Putzes 21 bzw. einer mit Luft 19 aus hinterlüfteten Wandoberfläche 22 eines Innenraums zu steuern, damit eine Klimatisierung in dem Innenraum des Gebäudes schnell und effektiv erfolgen kann. Analog zu dem bereits vorhergehend beschriebenen Beispiel erfolgt hier die Energieübertragung auf das in dem Kondensator 17 der Kraftwärmemaschine 31 befindliche Gas-Arbeitsfluid 6 statt auf Wasser, wie dies in dem Beispiel der Kraftwärmemaschine in Fig. 3 dargestellt ist. Die einzelnen Schritte des Energieübertragungsprozesses erfolgen in analoger Weise zu der Kraftwärmemaschine 30. Die Hinterlüftung des Putzes 21 ist hier durch Öffnungen 22 angedeutet - vgl. auch Fig. 2. Vorteilhafter Weise sind die einzelnen Energiekreise unabhängig voneinander, so dass auch unterschiedliche Arbeitsfluida 6 in den Kraftwärmemaschinen 30 bzw. 31 ... usw. genutzt werden können.

In einer weiteren vorteilhaften Ausführungsform der Erfindung lässt sich die in den Innenraum einströmende Luft in dem Kammer 32 entsprechend befeuchten/entfeuchten und darauf folgend mittels Wärmetauscher 34 hinsichtlich der gewünschten Temperatur anpassen. Dadurch kann ein Innenraumklima noch besser eingestellt werden.

Ventile 13, die als Libellen ausgebildet sind, ermöglichen das Steuern der Richtung des Arbeitsfluids 6 in dem Zwischenraum CCT. Die Ventile können elektrisch oder mechanisch angesteuerte Ventile sein. Dadurch kann eine Interdependenz mehrerer Energiekriese voneinander hergestellt und dadurch auch berücksichtigt werden. Im vorliegenden Beispiel ist eine Interdependenz zwischen dem Energiekreislauf der Kraftwärmemaschine 30, mit dem Energiekreislauf der Kraftwärmemaschine 31 gegeben.

Die Kraftwärmemaschine 31, Fig. 1 zeigt eine Steuerung der Wärmeenergie mittels SPS 48 und 49, wobei Querschnitte der einzelnen Elemente der Kraftwärmemaschine 31 CCT, EET, FFT, 32, 33, 34, SPS 48 und SPS 49 beansprucht werden und vereinfacht dargestellt sind. Im Bereich des Querschnittes CCT wird die Temperatur und Feuchte optimiert, wobei ein Wärmeenergieverbrauch der Kraftwärmemaschine 30 und ein Feuchtezustand der Ausfachungselemente 3 für ein gewünschtes optimales Ergebnis gesteuert werden können. Die externen Elemente FFT und EET der Kraftwärmemaschine 31 dienen zur Optimierung der Temperatur im Bereich des Querschnittes CCT, wobei Temperaturverschiebungen T2 bis T6 dargestellt sind. Die Temperatur im Bereich des CC wird in dem vorgegebenen Beispiel über einen Luftkanalkollektor 24 mittels eines Gas-Arbeitsfluids 6 beeinflusst. Eine Feuchteoptimierung der Ausfachungselemente 3 wird durch eine Anordnung einer Befeuchtungs- und Entfeuchtungskammer 33 nach Bedarf angepasst. D.h., mittels des Luftkanalkollektors 24 und der Befeuchtungs- und Entfeuchtungskammer 33 wird eine Luftqualität und Temperatur so angepasst, dass ein optimaler Energieverbrauch und Feuchtezustand der Ausfachungselementen 3 zur Einstellung eines angenehmen Behagens und einer erforderlichen relativen Feuchtigkeit im Innenraum erreicht wird. Die durchströmende Luft aus den Entfeuchtungskanälen wird als Abwärme weiter in einem Wärmetauscher 34 komprimiert, wobei die Temperatur einer Zuluft für den Innenraum vorab noch in einer Befeuchtungs- und Entfeuchtungskammer optimiert wird.

In Fig. 2 werden skizzenhaft mögliche Temperaturverläufe an der Außenoberfläche 50 mit einer Temperaturverlauf T1 für Tag- und Nacht-Amplituden dargestellt. Innerhalb eines Schnittes des Bauwerkteils 1 wird eine Optimierung eines Temperaturverlaufs T7 an Innenoberfläche des Bauwerkteils 1 in einer perspektivischen Ansicht dargestellt. Die einzelnen Temperaturverläufe 50 stellen vereinfacht eine thermische Konvektion an der Außenoberfläche eines Bauwerkteils 1 gemäß einer Ausführungsform der Erfindung anhand einer Temperaturverteilung einer äußeren Umgebung im Verlauf eines Tages dar. Fig. 2 lehnt sich dabei an das Ausführungsbeispiel aus Fig. 1 an und ist auch im Zusammenhang mit der obigen Figurenbeschreibung zu Fig. 1 zu betrachten.

Es sei angemerkt, dass die einzelnen Temperaturverläufe von T1 bis T7 innerhalb desselben Bauwerksteils 1 auftreten, wobei lediglich Momentaufnahmen zu bestimmten Zeitpunkten bei Variablen "Außentemperaturen" von +30°C bis -20°C und einer idealisierten "konstanten Innenraumtemperatur" von +20°C dargestellt werden. Dabei kann durch eine geschickte Einstellung bzw. Steuerung der Temperaturen T3, T4 und T5 in den Leitungen 5 der einzelnen Bereiche des Bauwerksteils 1 der Verlauf der Art so angepasst werden, dass ein besonders hoher Energieeintrag von "außen" bzw. ein besonders hoher Energieaustrag nach "innen" durch Verschiebung der Temperaturen von T1 bis T7 erreicht wird - beispielswiese bei einem gewollten Aufheizen einer Wandoberfläche 20 eines Innenraums und/oder auch unter Bezugnahme auf das Ausführungsbeispiel mit der hinterlüfteten Wandoberfläche 20, wobei die Luft des Innenraums zeitnah erhöht wird. Im Falle des Kühlens erfolgt die Einstellung bzw. die Steuerung der Temperaturen T3, T4 und T5 analog.

Temperaturänderungen im Laufe einer Tag/Nacht-Amplitude entsprechen den vorliegenden Umweltbedingungen. In der Fig. 2 werden zwei Beispiele von Temperaturverläufen mit deren Amplituden gezeigt, einer während des Sommers und einer während des Winters.

Beispielsweise beträgt eine Schwankung einer Tag/Nacht-Amplitude im Fall dieses Beispiels ca. 13 ° C, wobei die Temperatur am Tag über eine längere Zeit hinweg von 4 °C zu hoch ist. Während dieser Zeit muss die Wärmeenergie im Bereich des Schnittes BB durch Kühlen und Übertrag der Energie in Bereich DD, Fig. 1, eines externen Bauwerks mittels einer Kraftwärmemaschine 30 abgeführt werden. Parallel dazu wird die Frischzuluft mit einer Kraftwärmemaschine 31 mittels eines Luft - Luft Wärmetauscher 34 gekühlt wobei die Wärme in externe Bauwerke EE und/oder FF abgeführt wird.

Je nach Bedarf kann die Wärmeenergie in Morgenstunden mit der Kraftwärmemaschine 30 mittels der Energiepuffer 26 aus dem Bereich AA und mittels der Energiepuffer 26 in Bereich BB erhöht werden und die Innenoberflächen 21 erwärmen. Außerdem kann zusätzlich ein externes Bauwerk im Bereich DD als Energiequelle mit seinen Energiepuffern 26 beansprucht werden.

Parallel dazu wird die Frischzuluft mit der Kraftwärmemaschine 31 mittels des Luft - Luft Wärmetauschers 34 aufgewärmt, wobei die Wärmequelle die externen Bauwerke EE und FF sein können. Mit der verbrauchten Innenluft wird auf dem Rückweg über hinterlüftete Wandoberflächen 22 die Temperatur an der Oberfläche 21 zusätzlich aufrechtgehalten. Für diesen Zweck werden Energiepuffer-Kollektoren 27 eingesetzt.

Im Winter geht es hauptsächlich darum Wärmeenergie zu erhalten. Die Temperaturen im Winter im Bereich von -10°C bis - 20°C treten nur selten auf und wenn überhaupt nur über kurze Zeitabschnitte hinweg. Ein besonderer Vorteil bei dieser Erfindung ist, dass man die Wärmeenergie aus natürlichen Energiequellen nutzen kann (Geothermik, Grundwasser, Windenergie, Photovoltaik usw.).

Im vorgegebenen Beispiel Fig. 2 zeigt die Winteramplitude für Tag/Nacht ein Temperaturunterschied von 26°C. Da bei der ganzen Tag/Nacht Amplitude die Temperaturen unterhalb der Temperatur 36 = T7 liegt, muss die Temperatur T3 beeinflusst durch Temperatur T4 des Arbeitsfluids 6 im Energiepuffer 26 permanent im Vergleich zu der Temperaturänderung 50 = T1 optimal herabgesetzt werden, wobei die Wärmeenergie aus einer Umgebung des Bauwerkteils 1 in kühlere Energiepuffer 26 fließt. Wie in der Beschreibung der Fig. 1 bereits dargelegt wurde, wird die aufgenommene Wärmeenergie mittels Wärmetauschkollektor 23 im Energiepuffer 26 durch Einsatz des Gas-Arbeitsfluides 6 in den Leitungen 5 aus dem Bereich AA in Wärmetauschkollektor 23 des Energiepuffer 26 im Bereich BB mittels Kraftwärmemaschine 30 für Heizzwecke übertragen.

Fig. 3 Stellt ein System von zusammengeschlossenen Bauwerkteilen 1 in einer vereinfachten Weise dar. Dabei lehnt sich Fig. 3 an das Ausführungsbeispiel aus Fig. 1 an und ist auch im Zusammenhang mit der zu Fig. 1 zu betrachten. Als Ziel sollen die mit Innenraum im Kontakt stehenden Bauwerkteile 1 mit Energie versorgt werden oder vom Überschuss der Energie entlastet werden. Bei dem vorgestellten Beispiel werden die folgenden Energiequellen dargestellt:

Eine Hausaußenoberfläche 10 als Sonnenstrahlungs- und Umweltenergieabsorber, eine Dachschrägen-Rippeplatte 14 als Sonnenstrahlungs- und Umweltenergieabsorber, eine Kellerwandplatte 15 als Geothermie-Energieabsorber, eine Fundament-Rippenplatte 39 als Geothermie-Energieabsorber, ein Fundamente 40 als Geothermie-Energieabsorber, ein Nebenbauwerk 41 in Kontakt mit der Umwelt auch als Energieabsorber. Durch das Verfahren der vorliegender Erfindung wird die Wärmeenergie zwischengespeichert und in oben genannte Bauwerke mittels SPS 45, 46 Steuerung über zusätzliche Wärmetauscher 42, 43 transformiert und in einem Bereich BB und CC des Bauwerkteils 1 konzentriert.

Die SPS Steuerung 45 ist für eine mehrstufige Gas - Gas Kraftwärmemaschine ausgelegt. Der Wärmetauscher 42 ermöglicht eine Nutzung von mindestens einem externen Bauwerk und/oder Bauwerkteil und/oder mindestens einem Baustein, wobei die Temperatur im Bereich BB des Bauwerkteils 1 von der SPS 45 gesteuert, also erhöht oder gesenkt wird.

Die SPS Steuerung 46 für Wärmetauscher 43 ist komplexer ausgelegt und für einen angeschlossenen Energiepuffer-Luftkanalkollektor 27 zuständig, darüber hinaus aber auch für die Steuerung der Luftqualität in den Entfeuchtungskanälen 9. D.h., mittels der Anordnung der SPS Steuerung 46 wird die Luftqualität in den Entfeuchtungskanälen 9 mittels einer Anlage 44 zur Befeuchtung und/oder Entfeuchtung, Temperaturförderung des flüssigen Fluides etc. entsprechend der an Innenoberflächen notwendigen Zuständen permanent angepasst. Dabei wird sowohl der Feuchtezustand, insbesondere in den Ausfachungselementen 3, als auch eine Optimierung der Temperaturen im Bereich CC angestrebt.

Die Wärmeenergie aus externen Bauwerkteilen kann permanent genutzt werden und zwar auch dann, wenn die Oberflächen der Entfeuchtungskanäle vereist sind. D.h., in einer solchen Phase wird eine Sublimation des Wassers genutzt. In bestimmten Fällen kann das Kondensat des Wassers in den Entfeuchtungskanälen 9 für einen Hausgebrauch auch als Wasserquelle dienen.

## Patentansprüche

1. Bauwerksteil (1) aus Bauwerkselementen in Fachwerkbauweise, wobei ein Bauwerkselement umfasst:
ein Stabtragwerk mit Stützen- (2) und/oder Riegelelementen (4) sowie dazwischen angeordneten Ausfachungselementen (3), bei dem/denen zumindest ein Stützenelement (2) und/oder ein Riegelelement (4) im Innenquerschnitt Leitungen (5) mit einem darin befindlichen Arbeitsfluid (6) aufweisen,
wobei das zumindest eine Stützen- (2) und/oder das zumindest eine Riegelelement (4) als Kondensator (17) oder Verdampfer (18) einer reversiblen Kraftwärmemaschine (30, 31) integriert ist, indem in die Leitungen (5) mittels Ventilen (V1, V2, V3 ,V4) eine Kompressor- (7) und/oder Expansionsventileinheit (8) zwischengeschaltet sind,
wobei zumindest ein Entfeuchtungskanal (9) im Bauwerksteil vorgesehen ist, der zwischen dem Stabtragwerk und einer Platte (14, 15) oder einem weiteren Stabtragwerk angeordnet ist, und der einen darin zur Temperaturregulierung vorgesehenen Luftkanalkollektor (24) aufweist,
wobei der Luftkanalkollektor (24) eine Leitung (5) mit einem darin befindlichen Arbeitsfluid (6) umfasst, sodass zumindest einer der Entfeuchtungskanäle (9) im Bauwerksteil (1) als Kondensator (17) oder Verdampfer (18) der reversiblen Kraftwärmemaschine (30, 31) betreibbar ist.

2. Bauwerksteil (1) nach Anspruch 1,
**dadurch gekennzeichnet, dass**
das Stabtragwerk mit Stützen- (2) und/oder Riegelelementen (4) mit den dazwischen angeordneten Ausfachungselementen (3) thermisch koppelbar ist.

3. Bauwerksteil (1) nach Anspruch 1 oder 2,
**dadurch gekennzeichnet, dass**
die Ausfachungselemente (3) und/oder das Stabtragwerk einen hohen Wärmeübertragungskoeffizienten aufweisen.

4. Bauwerksteil (1) nach einem der Ansprüche 1 bis 3,
**dadurch gekennzeichnet, dass**
die Ausfachungselemente (3) und/oder das Stabtragwerk (2 und/oder 4) und/oder ein Entfeuchtungskanal (9) als Energiepuffer wirken.

5. Bauwerksteil (1) nach einem der Ansprüche 1 bis 4,
**dadurch gekennzeichnet, dass**
die Ausfachungselemente (3) derart ausgebildet sind, dass Sonnenenergie und/oder Umgebungsenergie und/oder Raumenergie in Form von Wärme und/oder Feuchte darin speicherbar ist.

6. Bauwerksteil (1) nach einem der Ansprüche 1 bis 5,
**dadurch gekennzeichnet, dass**
die Ausfachungselemente (3) ein oder mehrere der Materialien wie Lehm, Leichtlehm, Erde und/oder gebrannten Ziegelstein umfassen.

7. Bauwerksteil (1) nach einem der Ansprüche 1 bis 6,
**dadurch gekennzeichnet, dass**
das Bauwerksteil (1), insbesondere Wand-, Decken-, Böden-, Fundament-, Dachkönstruktionen, mittels der Bauwerkselemente herstellbar ist.

8. Bauwerksteil (1) nach einem der Ansprüche 1 bis 7,
**dadurch gekennzeichnet, dass**
mehrere Stabtragwerke parallel zueinander angeordnet sind.

9. Bauwerksteil (1) nach einem der Ansprüche 1 bis 8,
**dadurch gekennzeichnet, dass**
durch die Leitungen (5) mittels des Arbeitsfluids (6) Energie zwischen den Bauwerksteilen (1) transportierbar ist.

10. Bauwerksteil (1) nach einem der Ansprüche 1 bis 9,
**dadurch gekennzeichnet, dass**
einzelne oder mehrere Bauwerksteile (1) als Einkreis-Kraftwärmemaschine (30 und/oder 31) und/oder als Mehrkreis-Kraftwärmemaschine (30 und/oder 31) betreibbar sind.

11. Bauwerksteil (1) nach einem der Ansprüche 1 bis 10,
**dadurch gekennzeichnet, dass**
die durch die Bauwerkselemente gebildete Kraftwärmemaschine (30 und/oder 31) an Sonnenenergie- und/oder, Geothermie- und/oder Windenergie- und/oder Wasserenergieanlagen koppelbar ist.

12. Gebäude mit zumindest einem Bauwerksteil (1) nach einem der Ansprüche 1 bis 11.

13. Verfahren zum Betreiben eines Bauwerksteils (1) nach einem der Ansprüche 1 bis 11 und/oder eines Gebäudes nach Anspruch 12,
**dadurch gekennzeichnet, dass**
die Temperatur zumindest einer Oberfläche eines Bauelements des Bauwerkteils (1) und/oder Gebäudes gesteuert wird, mittels Bauwerkselementen, die Stützen- (2) und Riegelelemente (4) sowie dazwischen angeordnete Ausfachungselemente (3) umfassen, bei denen zumindest ein Stützenelement (2) und/oder ein Riegelelement (4) und/oder ein Entfeuchtungskanal (9) im Innenquerschnitt Leitungen (5) mit einem darin befindlichen Arbeitsfluid (6) aufweisen, wobei die einzelnen Stützen- (2) und/oder Riegelelemente (4) und/oder Entfeuchtungskanäle (9) als Kondensator (17) oder Verdampfer (18) einer reversiblen Kraftwärmemaschine (30, 31) wirken, indem zumindest eine in die Leitungen (5) mittels Ventilen (V1, V2, ...,V9) zwischengeschaltete Kompressor- (7) und/oder Expansionsventileinheit (8) vorgesehen wird.

14. Verfahren nach Anspruch 13,
**dadurch gekennzeichnet, dass**
zumindest eine Kraftwärmemaschine (30 und/oder 31) in steuerbaren diskreten Zeitabständen betrieben wird.

15. Verfahren nach Anspruch 13 oder 14,
**dadurch gekennzeichnet, dass**
eine Temperatur des Arbeitsfluids (6) so eingestellt wird, dass eine Kondenswasserbildung in einem angrenzenden Bereich der Leitungen (5) und an Oberflächen (20) vermieden wird.

## Claims

1. Building component (1) made of building elements in skeleton framing design,
wherein the building element comprises:
a frame structure with column- (2) and/or bar-elements (4) as well as in between arranged infill elements (3), wherein at least one column-element (2) and/or one bar-element (4) have pipes (5) in the inside cross section thereof with a working fluid (6) therein,
wherein the at least one column- (2) and/or the at least one bar-element (4) is integrated as a condenser (17) or evaporator (18) of a reversible heat pump (30, 31),
wherein a compressor- (7) and/or an expansion valve-unit (8) are inserted in between the pipes (5) by means of valves (V1, V2, V3 ,V4),
wherein at least a dehumidification shaft (9) is provided in the building component,
which is arranged between the frame structure and a slab (14, 15) or a further frame structure, and which has therein an air-duct-collector (24) provided for temperature regulation,
wherein the air-duct-collector (24) comprises a pipe (5) with a working fluid (6) therein, so that at least one of the dehumidification shafts (9) in the building component (1) is operable as a condenser (17) or an evaporator (18) of the reversible heat pump (30, 31).

2. Building component (1) according to claim 1,
**characterized in that**
the frame structure with column- (2) and/or bar-elements (4) is thermally couplable with the infill elements (3) arranged in between.

3. Building component (1) according to claim 1 or 2,
**characterized in that**
the infill elements (3) and/or the frame structure have a high heat transfer coefficient.

4. Building component (1) according to one of the claims 1 to 3,
**characterized in that**
the infill elements (3) and/or the frame structure (2 and/or 4) and/or a dehumidification shaft (9) operate as an energy buffer.

5. Building component (1) according to one of the claims 1 to 4,
**characterized in that**
the infill elements (3) are designed in such a manner, that solar energy and/or ambient energy and/or energy of the chamber in the form of heat and/or humidity is storable therein.

6. Building component (1) according to one of the claims 1 to 5,
**characterized in that**
the infill elements (3) comprise one or a plurality of a material like loam, light loam, soil and/or fired clay.

7. Building component (1) according to one of the claims 1 to 6,
**characterized in that**
the building component (1), in particular wall-, ceiling-, floor-, foundation-, roof- construction, is producible by means of der building elements.

8. Building component (1) according to one of the claims 1 to 7,
**characterized in that**
a plurality of frame structures are arranged parallel to each other.

9. Building component (1) according to one of the claims 1 to 8,
**characterized in that**
energy between the building components (1) is portably through the pipes (5) by means of the working fluids (6).

10. Building component (1) according to one of the claims 1 to 9,
**characterized in that**
individual or a plurality of building components (1) are operable as a single cycle heat pump (30 and/or 31) and/or as a multiple cycle heat pump (30 and/or 31).

11. Building component (1) according to one of the claims 1 to 10,
**characterized in that**
the heat pump (30 and/or 31) formed of the building elements is couplable to a solar- and/or, a geothermal- and/or a wind- and/or a water-energy plant.

12. Building with at least one building component (1) according to one of the claims 1 to 11.

13. Method for operating a building component (1) according to one of the claims 1 to 11 and/or a building according to claim 12,
**characterized in that**
the temperature of at least one surface of a building element of the building component (1) and/or of the building is controlled, by means of building elements, comprising column- (2) and bar-elements (4) as well as in between arranged infill elements (3), wherein at least one column-element(2) and/or one bar-element (4) and/or a dehumidification shaft (9) have pipes (5) in the inside cross section thereof with a working fluid (6) therein,
wherein the individual column- (2) and/or bar-elements (4) and/or dehumidification shafts (9) operate as a condenser (17) or evaporator (18) of a reversible heat pump (30, 31), wherein at least one compressor- (7) and/or expansion valve-unit (8) is provided, inserted in between the pipes (5) by means of valves (V1, V2,..., V9).

14. Method according to claim 13,
**characterized in that**
at least one heat pump (30 and/or 31) is operated in controllable discreet intervals.

15. Method according to claim 13 or 14,
**characterized in that**
a temperature of the working fluid (6) is adjusted such that a condensation formation is avoided in an adjacent area of the pipes (5) and on surfaces (20).

## Revendications

1. Elément de construction (1) constitué par des éléments de bâtiments en colombage, dont un élément de bâtiment comprend:
une structure porteuse à poutres avec des éléments de support (2) et/ou des éléments de verrouillage (4) ainsi que des éléments de remplissage (3) disposés entre eux, de sorte qu'au moins un élément de support (2) et/ou un élément de verrouillage (4) dans la section intérieure aient des conduites (5) avec un fluide de travail dedans (6),
alors qu'au moins cet élément de support (2) et/ou au moins cet élément de verrouillage (4) soient intégrés comme condensateur (17) ou évaporateur (18) d'une machine à chaleur réversible (30, 31), de sorte qu'au moyen des vannes (V1, V2, V3, V4) dans les conduites (5) une unité de compresseur (7) et/ou une unité de soupape d'expansion (8) soient interposées,
alors qu'au moins un canal de déshumidification (9) est prévu dans l'élément de construction, qui est aligné entre la structure porteuse à poutres et une dalle (14, 15) ou une autre structure porteuse à poutres et qui a dedans un conduit collecteur d'air prévu pour la régulation de la température (24),
alors que le conduit collecteur d'air (24) comprend une conduite (5) avec un fluide de travail (6) dedans, de sorte qu'au moins un des canaux de déshumidification (9) dans l'élément de construction (1) peut être utilisé comme condensateur (17) ou
évaporateur (18) de la machine à chaleur réversible (30, 31).

2. Élément de construction (1) selon la revendication 1,
**caractérisé en ce que**
la structure porteuse à poutres avec des éléments de support (2) et/ou des éléments de verrouillage (4) peut être couplé thermiquement aux éléments de remplissage (3) disposés entre eux.

3. Élément de construction (1) selon la revendication 1 ou 2,
**caractérisé en ce que**
les éléments de remplissage (3) et/ou la structure porteuse à poutres ont un coefficient élevé de transmission de la chaleur.

4. L'élément de construction (1) selon une des revendications 1 à 3,
**caractérisé en ce que**
les éléments de remplissage (3) et/ou la structure porteuse à poutres (2 et/ou 4) et/ou un canal de déshumidification (9) agissent en tant que réserve d'énergie.

5. L'élément de construction (1) selon une des revendications 1 à 4,
**caractérisé en ce que**
les éléments de remplissage (3) sont réalisés de telle manière qu'ils puissent stocker dedans l'énergie solaire et/ou l'énergie ambiante et/ou l'énergie des locaux sous forme de chaleur et/ou d'humidité.

6. L'élément de construction (1) selon une des revendications 1 à 5,
**caractérisé en ce que**
les éléments de remplissage (3) comprennent un ou plusieurs matériaux comme l'argile, argile légère, terre et/ou brique cuit.

7. L'élément de construction (1) selon une des revendications 1 à 6,
**caractérisé en ce que**
l'élément de construction (1), particulièrement des constructions de paroi, de plafond, de sol, de fondation, de toit, peuvent être fabriqués au moyen d'éléments de bâtiment.

8. L'élément de construction (1) selon une des revendications 1 à 7,
**caractérisé en ce que**
plusieurs structures porteuses à poutres sont alignées parallèlement les unes aux autres.

9. L'élément de construction (1) selon une des revendications 1 à 8,
**caractérisé en ce que**
l'énergie entre les éléments de construction (1) peut être transportée dans les conduites (5) au moyen du fluide de travail (6).

10. L'élément de construction (1) selon une des revendications 1 à 9,
**caractérisé en ce que**
un ou plusieurs éléments de construction (1) peuvent être utilisés comme une machine à chaleur mono-circuit (30 et/ou 31) et/ou comme une machine à chaleur à plusieurs circuits (30 et/ou 31).

11. L'élément de construction (1) selon une des revendications 1 à 10,
**caractérisé en ce que**
la machine à chaleur (30 et/ou 31), constituée par les éléments de bâtiment, peut être couplée aux installations solaires et/ou géothermiques et/ou éoliennes et/ou aux installations à l'énergie hydraulique.

12. Bâtiment avec au moins un élément de construction (1) selon une des revendications 1 à 11,

13. Procédé pour le fonctionnement d'un élément de construction (1) selon une des revendications 1 à 11 et/ou d'un bâtiment selon la revendication 12,
**caractérisé en ce que**
la température au moins d'une surface de l'élément de construction (1) de l'élément de bâtiment est contrôlée, au moyen des éléments de bâtiment, qui comprennent des éléments de support (2) et des éléments de verrouillage (4), ainsi que des éléments de remplissage (3) disposés entre eux, dans lesquels au moins un élément de support (2) et/ou un élément de verrouillage (4) et/ou un canal de déshumidification (9) ont des conduites (5) contenant un fluide de travail (6) dans la section intérieure, alors que les éléments de support (2) et/ou les éléments de verrouillage (4) et/ou les canaux de déshumidification (9) fonctionnent comme condensateur (17) ou évaporateur (18) d'une machine à chaleur réversible (30, 31), en prévoyant au moins une unité de compresseur (7) et/ou une unité de soupape d'expansion (8) interposées dans les conduites (5) au moyen des vannes (V1, V2, ..., V9).

14. Procédé selon la revendication 13,
**caractérisé en ce que**
au moins une machine à chaleur (30 et/ou 31) est utilisée dans des intervalles discrètes et contrôlables.

15. Procédé selon la revendication 13 ou 14,
**caractérisé en ce que**
la température du fluide de travail (6) est réglée de manière qu'on évite la condensation dans une zone adjacente aux conduites (5) et sur des surfaces (20).
